# EUROPEAN PATENT APPLICATION

(11) **EP 0 827 001 A2**
(43) Date of publication of application: **04.03.1998**
(21) Application number: 97306138.5
(22) Date of filing: 12.08.1997
(51) Int. Cl.: G02B 7/18, G02B 26/10

(54) **Piezoelectric scanner**

(30) Priority: 24.08.1996 GB 9617755
(71) Applicant: GEC-MARCONI LIMITED, Stanmore, Middlesex HA7 4LY (GB)
(72) Inventor: Archer, Nicholas John, Chelmsford, Essex, CM2 8XL (GB); Rowe, Duncan Peter, Chelmsford, Essex, CM2 9PN (GB)
(74) Representative: Fitchett, Stuart Paul

(57) **Abstract**

A piezoelectric scanner (1) comprises four piezoelectric elements (4a to 4d) bonded in base member (2) and attached via respective couplings (6a to 6d) to a member (7) to be scanned. Each piezoelectric element (6a to 6d) comprises two layers of piezoelectric material arranged in opposite sense such that when a voltage is applied across the material it is caused to bend. The four elements (4a to 4d) are connected such that an applied voltage either causes all the elements to bend inwards or to cause all the elements to bend outwards. The couplings (6a and 6d) are mounted lower on the member (7) than coupling (6b) and (6c) such that applying a voltage to the elements (6a to 6d) cause the member (7) to rotate. The centre of gravity of the member (7) lies on the axis of rotation and therefore the scanner is less susceptible to external vibration than previous designs. The invention also provides a method by which such a scanner can be commercially manufactured.

## Description

This invention relates to a piezoelectric scanner and particularly to such a scanner for scanning a mirror. The invention also provides a method of producing such scanners.

It has been proposed to incorporate piezoelectric mirror scanners into thermal imagers. Typically such imagers may require a scanner to operate at 50Hz with a fly back time of a few milliseconds. Furthermore in such applications it is desirable that the linearity of the scan is better than 0.1%. Because thermal imagers are often employed in hostile environments, subject to large temperature ranges and mechanical vibration, it is desirable that any scanning mechanism be of relatively robust design. There is also often a requirement for a compact design.

UK patent application number GB 2289773 A, the entire disclosure of which is hereby incorporated by way of reference, discloses a piezoelectric scanner of the above type. Piezoelectric scanners, of the type disclosed in this earlier application, can be particularly compact as they have very few moving components. The member to be scanned, typically a mirror, is supported by a number of bimorph piezoelectric elements, that is a piezoelectric element comprising two sheets, or strips, of piezoelectric material the major faces of which are bonded together, with the sheets arranged in opposite sense, such that applied electric field causes one layer to expand and the other to contract in one direction in the plane of the element. This causes the piezoelectric to bend in a similar manner to be a bi-metallic strip and this effect is harnessed by means of an appropriate coupling and used to scan the mirror directly in response to an electrical signal applied to one or more piezoelectric elements. However there are problems associated with the scanner disclosed in the earlier application. The present invention aims to overcome these problems.

According to a first aspect of the present invention there is provided a piezoelectric scanner comprising: a member to be scanned; a pair of bimorph piezoelectric elements; and a pair of flexible couplings, each coupling linking a respective element to the member to be scanned, the components being arranged such that when appropriate electric signals are applied to the elements the member to be scanned is rotated about an axis, which axis passes through the centre of gravity of the member to be scanned.

Employing the first aspect of the present invention the axis of rotation passes through the centre of gravity of the member to be scanned, and thus the scanner is not susceptible to forces applied externally, enabling the scanner to be used in applications susceptible to vibration or high acceleration forces.

Preferably the member to be scanned is substantially planar having first and second opposed major surfaces, one piezoelectric element acting on the first major surface, and the other element acting on the second major surface via respective couplings, each coupling being offset relative to the other such as to cause the member to rotate about an axis which lies between the couplings. This arrangement enables the piezoelectric elements to act very close to the axis of rotation thereby maximising the angle of rotation obtained for a given displacement of the piezoelectric elements. This is particularly advantageous for it enables the design to operate at high frequencies due to the relatively small displacement required of the elements.

Preferably the scanner comprises two pairs of piezoelectric elements, one element from each pair being connected to the first major surface, and the other element from each pair being connected to the second major surface, by respective couplings, the two pairs of elements being axially displaced relative to the axis about which the member to be scanned is to be rotated, the member to be scanned extending between the two pairs of elements. In this manner the member to be scanned can be totally supported by the two pairs of elements with its centre of gravity between the two pairs of elements. When correctly balanced the member to be scanned is substantially immune from the effects of accelerational forces in all three axis. The surface to be scanned would typically be a mirror.

It is preferable that the couplings are connected to an integral lug of the member to be scanned. This avoids the need to mount extension members to the rear surface of any mirrored surface, which has previously been the means by which such mirrors are mounted. This enables the position of the centre of gravity of the mirror to be more accurately predicted, the centre of gravity no longer depending on thickness of bonding agent used in previous designs to bond lugs onto the back surface of the mirror. Because the centre of gravity is more easily predicted it is possible to produce more uniform scanner arrangements which therefore need little subsequent balancing. This is particularly advantageous for it enables the centre of gravity to be maintained on the axis of rotation, without requiring excessive masses to be added to the member to be scanned, in order to balance it, which additional mass would have the effect of reducing the resonant frequency of the mirror. Reducing the resonant frequency is undesirable because this limits the useable upper frequency range of operation for this must be substantially below the resonant frequency.

It may be advantageous if the couplings are elongate in cross section, the cross sectional dimensions of each coupling in a plane parallel to the plane of the member to be scanned being greater in a direction parallel to the axis about which the member to be scanned is arranged to be rotated than in the direction perpendicular to said axis. This enables the coupling stiffness to be maximised without causing opposed couplings to overlap.

It is preferable that the coupling extends through an aperture in the piezoelectric element. This enables the coupling to be correctly located on the piezoelectric element and the coupling can then be bonded into said element without forming a meniscus, (such a meniscus would be formed if liquid coupling material were simply applied to the piezoelectric element which material would then form the coupling when set). Also by employing a coupling which extends into the piezoelectric material the exact effective length of the coupling, that length between the surface of the element and the member to be scanned, can be accurately determined. Again knowing the uniform diameter and length of the coupling enables the characteristics of the scanner to be more accurately determined and enables the scanner to have more reproducible characteristics when manufactured commercially.

The above recited feature of employing a coupling having a non-uniform cross section can advantageously be employed to scanner arrangements other than those in accordance with the first aspect of the invention. Accordingly a second aspect of the invention provides a member to be scanned, a bimorph piezoelectric element and a flexible coupling connected at a first end to the piezoelectric element, and at a second end to the member to be scanned, the components being arranged such that an electrical signal applied to piezoelectric element acts to rotate the member to be scanned about a first axis, the cross sectional dimensions of the coupling in the plane mutually perpendicular to a second axis connecting the first and second ends of the coupling, being greater in the direction parallel to the first axis than in the perpendicular direction.

According to a third aspect of the invention there is provided a method of manufacturing a piezoelectric scanner of the type comprising: a member to be scanned; at least one bimorph piezoelectric element; and a flexible coupling linking the piezoelectric element to the member to be scanned, the method comprising the steps of: arranging the member to be scanned in a predetermined position in a jig, injecting a liquid in an aperture in the jig, the aperture extending through the jig to a point on the surface of the member to be scanned were it is desired the coupling be attached; allowing the liquid to set to form the flexible coupling; removing the jig; and connecting the free end of the flexible coupling to the piezoelectric element.

The above method enables the coupling to be precisely located on the member to be scanned. Furthermore because the jig forms a mould for the flexible coupling material any meniscus formed is negligible, thus the cross section of the coupling can be uniform throughout its length.

It is particularly advantageous if the piezoelectric element is connected to the flexible coupling by providing a small aperture in the piezoelectric element for receiving the free end of the coupling and bonding the coupling in the aperture in the piezoelectric element. In this manner the effective length of the coupling can be determined, that is the length of the coupling between the surface of the piezoelectric element and the surface of the member to be scanned.

The small aperture in the piezoelectric element may advantageously be used to locate the element in position in a base member for the element, which may be achieved using a further jig. Using the hole in the piezoelectric element ensures the coupling is located at the right separation from the base member.

A piezoelectric scanner, and method of producing same, in accordance with all three aspects of the present invention will now be described, by way of example only, with reference to the accompanying figures, in which like reference numerals are used throughout to indicate the like parts, and of which:
Figure 1A is a front elevation of a scanner in accordance with the present invention;
Figure 1B is a side elevation of the scanner of Figure 1A;
Figure 1C is a cross section along the line I-I of Figures 1A and 1B.
Figures 2A to 2D are respectively: a plan view from above; side elevation; end elevation and plan view from below, of a first part of a jig used to form the couplings 6a to 6d of the scanner illustrated in Figures 1A to 1C; and
Figures 3A, 3B and 3C are respectively: a plan view from above; end elevation; and side elevation of a lid portion of the jig illustrated in Figures 2A to 2D.

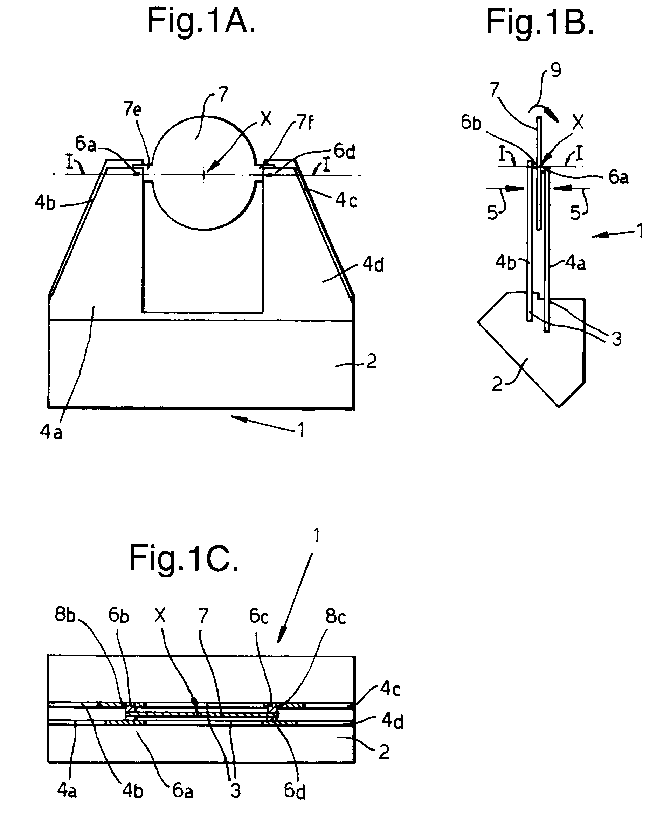

Referring now to Figures 1A, 1B and 1C, a piezoelectric scanner 1 comprises a base member 2 in slots 3 of which, bimorph piezoelectric elements 4a to 4d are bonded. Elements 4a and 4d are all connected to the same electrical signal and are arranged such that when a voltage is applied they all either bend inwards in the direction of arrows 5, or outwards depending on the polarity of the applied voltage.

Each of the elements 4a to 4d is connected via a respective flexible coupling 6a to 6d to the mirror to be scanned 7. Each coupling 6 is formed from silicone rubber moulded onto appropriate lug 7e or 7f of mirror 7. Each coupling 6a to 6d is oblong in cross section and extends into apertures 8a to 8d (of which only 8b and 8c are shown in Figure 1C) in respective elements 4a to 4d.

Elements 4b and 4c are set 1mm higher in base member 2 than are elements 4a and 4d. The length of each element 4a to 4d between its point of contact with the base member 2 and with its respective coupling 6a to 6d is constant for all four elements and therefore couplings 6b and 6c are mounted higher on the member 7 than are the couplings 6a and 6d. In the orientation illustrated in the figures the vertical centres of the respective pairs of couplings 6b, 6c and 6a, 6d are offset by 1 mm with each coupling having a minimum vertical width of.85mm. Thus the face areas of opposed pair of couplings do not overlap.

When a voltage is applied to elements 4a to 4d, such as to cause them to all be displaced in the direction of arrows 5 (Figure 1B), the mirror 7 rotates in the direction of arrow 9. This rotation will take place about an axis passing through point X, the centre of gravity of the mirror 7. Therefore external acceleration forces placed on the scanner will not act to rotate the mirror 7.

Increasing the vertical separation of respective pairs of couplings 6a, 6b and 6c, 6d will increase the resonant frequency of the mirror 7 and thus increase the usable frequency. However this will reduce the angle through which the mirror 7 will be scanned. The dimensions of the components of the scanner will depend on the particular application, but a typical example in an infrared imaging system would be an elliptical mirror having a 16mm diameter aperture with coupling elements having a width of 2.5mm, depth lmm and length 1mm, with the mirror being scanned in a sawtooth manner at a frequency of 50Hz.

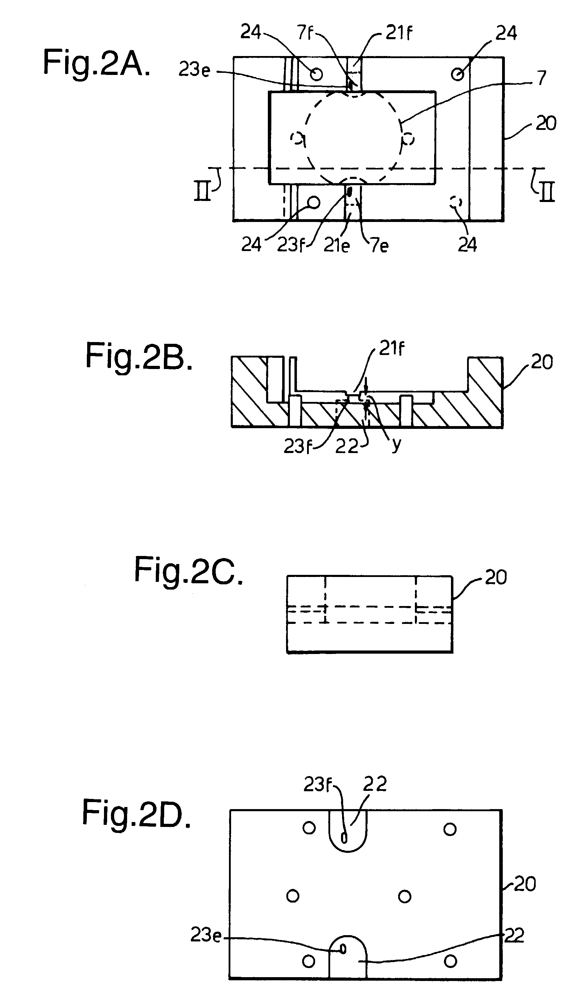

Referring now to Figures 2A to 2D there is illustrated a first part of a jig 20 having machined recesses 21e and 21f arranged to receive lugs 7e and 7f of the mirror 7 of Figure 1A indicated by broken line 7 in Figure 2A. On the underside of the first part of the jig 20, as shown in Figures 2B and 2D, are further machined recesses 22 which define a thickness Y of material immediately below where respective lugs 7e and 7f are to be located. Small apertures 23e and 23f extend through this region which apertures have the desired dimensions of the couplings 6a to 6d of Figure 1A, both in cross section and in length.

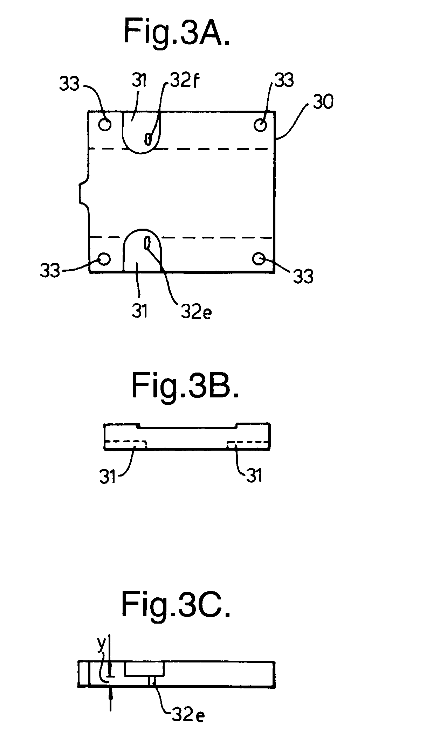

In Figures 3A to 3C there is illustrated a lid portion 30 for the jig 20. This comprises further machined recesses 31 which again define the thickness of material of the lid portion which, when the jig is assembled, will lie above the lugs 7e and 7f. Apertures 32e and 32f extend through this region, the dimensions of the aperture again corresponding to the required dimensions of the couplings 6a to 6d of Figure 1A.

To manufacture the piezoelectric scanner of Figure 1A a mirror 7 with respective lugs 7e and 7f is cut from an appropriate sheet of material such as silicone and assembled in the first part of jig 20, as illustrated in Figure 2A. The lid portion 30 of the jig is then positioned over the mirror 7 and the jig bolted together through apertures 24 and 33. Liquid silicone rubber is then injected into apertures 23e, 23f, 32e and 32f, with any excess being removed such that it finishes flush with respective machined recesses 22 and 31.

When the liquid silicone rubber has set the mirror 7 is removed from the jig with the four respective couplings bonded to its surface all having the desired dimensions.

The bimorph piezoelectric elements 4a to 4d are cut from an appropriate sheet of material and have respective apertures 6a to 6d machined in them. Each aperture is then located in a further jig (not shown) and the elements located in slots 3 of base member 2. The jig is appropriately dimensioned such as to ensure the exact separation between pairs of elements 4a, 4d and 4b, 4c and such as to define the distance between the base member 2 and the respective aperture 8a to 8d. The jig ensures that the elements are retained in the correct position while they are bonded into the base member 2.

Once the piezoelectric elements have been bonded into position and the jig removed the mirror is inserted into position between the piezoelectric elements with the couplings being received in respective apertures 8a to 8d. The couplings are then bonded into the apertures with the external free end face of the couplings 6a to 6d finishing flush with the external surfaces of respective elements 4a to 4d. Appropriate electrical connections are then made to the electrode faces of the elements 6a to 6d.

The invention has been described, by way of example only, with reference to a scanner for an infra-red imaging system. It will be appreciated that the invention is equally applicable to other applications requiring a scanner. It will also be appreciated that various arrangements of scanner other than the particular example illustrated will be in the scope of the claims appended hereto.

## Claims

1. A piezoelectric scanner (1) comprising: a member (7) to be scanned and a pair of bimorph piezoelectric elements (4a, 4b) characterised in that a pair of flexible couplings (6a, 6b) respectively link elements (4a, 4b) to the member (7) to be scanned, the components being arranged such that when appropriate electrical signals are applied to the elements (4a, 4b) the member (7) is rotated about an axis (I), which axis passes through the centre of gravity (X) of the member (7).

2. A scanner as claimed in claim 1 wherein the member (7) is substantially planar having first and second opposed major surfaces, one piezoelectric element (4a) acting on the first major surface and the other element (4b) acting on the second major surface via respective couplings (6a, 6b), each coupling being offset relative to the other such as to cause the member (7) to rotate about an axis (I) which lies between the couplings.

3. A scanner as claimed in claim 2 comprising two pairs of piezoelectric elements (4a, 4b and 4c, 4d), one element (4b, 4c) from each pair being connected to the first major surface, and the other element from each pair (4a, 4d) being connected to the second major surface, by respective couplings (6b, 6c, 6a, 6d), the two pairs of elements being axially displaced relative to the axis (I) about which the member (7) is to be rotated, the member (7) extending between the two pairs of piezoelectric elements.

4. A scanner as claimed in claim 1, 2 or 3 wherein the member (7) is a mirror.

5. A scanner as claimed in any preceding claim wherein the couplings are connected to an integral lug (7e, 7f) of the member.

6. A scanner as claimed in any preceding claim wherein the couplings (6a, 6b, 6c, 6d) are elongate in cross section, the cross sectional dimensions of each coupling in a plane parallel to the plane of the member (7) being greater in a direction parallel to the axis (I) about which the member (7) is arranged to be rotated than in the direction perpendicular to said axis (I).

7. A scanner as claimed in any preceding claim wherein the couplings extends into apertures (8a, 8b, 8c, 8d) in the piezoelectric elements.

8. A piezoelectric scanner comprising a member (7) to be scanned, a bimorph piezoelectric element (4) and a flexible coupling (6) connected at a first end to the piezoelectric element (4), and at a second end to the member (7), the components being arranged such that an electrical signal applied to the piezoelectric element acts to rotate the member about a first axis (I), the cross sectional dimensions of the coupling (6) in the plane mutually perpendicular to a second axis, connecting the first and second ends of the coupling, being greater in the direction parallel to the first axis (I) than in the perpendicular direction.

9. A method of manufacturing a piezoelectric scanner of the type comprising: a member (7) to be scanned; at least one bimorph piezoelectric element (4); and a flexible coupling (6) linking the piezoelectric element (4) to the member (7), the method comprising the steps of: arranging the member (7) in a predetermined position in a jig (20), injecting a liquid in an aperture (23) in the jig (20), the aperture extending through the jig to a point on the surface of the member (7) where it is desired the coupling (6) be attached; allowing the liquid to set to form the flexible coupling (6); removing the jig (20); and connecting the free end of the flexible coupling (6) to the piezoelectric element (4).

10. A method as claimed in claim 9 further comprising the step of connecting the free end of the flexible coupling (6) to the piezoelectric element (4) by providing a small aperture (8) in the piezoelectric element (4) and bonding the free end of the coupling (6) in the aperture.

11. A method as claimed in claim 10 comprising using a small aperture in the piezoelectric element (4) to locate the element in a predetermined position in a support structure (2) for the element.

12. A method as claimed in any one of claims 9 to 11 for manufacturing a piezoelectric scanner as claimed in any one of claims 1 to 8.
